## Europäisches Patentamt
## European Patent Office
## Office européen des brevets

(11) Publication number: **0 112 417**
**A1**

# EUROPEAN PATENT APPLICATION

(21) Application number: 82306866.3

(22) Date of filing: 22.12.82

(51) Int. Cl.³: **G 02 F 1/133**, G 02 F 1/17

(43) Date of publication of application: 04.07.84
Bulletin 84/27

(84) Designated Contracting States: DE FR GB IT

(71) Applicant: **International Business Machines Corporation, Old Orchard Road, Armonk, N.Y. 10504 (US)**

(72) Inventor: **Morgan, William Morris, 7 Keble Road Chandlers Ford, Eastleigh Hampshire (GB)**
Inventor: **Brewer, Gordon William, 10 Sycamore Close, North Baddesley Hampshire ( (GB)**

(74) Representative: **Moss, Robert Douglas, IBM United Kingdom Patent Operations Hursley Park, Winchester, Hants, SO21 2JN (GB)**

(54) Semiconductor integrated display and method of making same.

(57) A semiconductor integrated display. e.g. of the electrochromic or liquid crystal type, has a semiconductor substrate (1) with an addressable matrix of transistors (2) integrated therein. A corresponding array of display electrodes (3) is formed over the transistor matrix after first providing electrical connection through via holes in intermediate insulating layers (6, 7). To prevent photo-conduction of the substrate, particularly under projection lighting, a metallic light barrier (8) is provided between insulating layers (6, 7). The barrier includes at least one metal different from those in the vias (11) to facilitate selective etching of the barrier over and close to the edges of the vias. The barrier (8) extends over substantially the whole of the array except for rings of insulating material around each via (11). The preferred barrier metal is aluminium with a thin upper layer of chromium. Both layers may be partially etched to render the barrier surface black and light absorbing.

0112417

## SEMICONDUCTOR INTEGRATED DISPLAY AND METHOD OF MAKING SAME

### Technical Field of the Invention

The present invention relates to semiconductor integrated displays and methods of making such displays.

### Background of the Invention

In recent years, it has been proposed to integrate small passive displays of the electrochromic or liquid crystal type with an addressable matrix of transistors formed in a silicon or other semiconductor substrate. In such displays, the picture elements are formed in a corresponding matrix and each element is connected to a respective one of the transistors, which controls its operation. Such displays, up to and including the picture elements, are built employing techniques analogous to those employed in semiconductor integrated circuit manufacturing.

One severe problem encountered in these displays is that of photoconduction in the semiconductor substrate. If light, which illuminates the display for viewing or projection, penetrates to the substrate, the resulting photoconduction can produce undesirable electrical leakage paths. As a result unselected areas of the display can become coloured or the coloration of selected areas of the display can fade. This problem has been recognised in the art and various proposals made to overcome it.

UK patent application GB 2,011,639A describes a liquid crystal light valve which is operated by means of a number of charge coupled devices integrated on one side of a silicon substrate. On the other side of the substrate is a liquid crystal layer enclosed by a

0112417

transparent common electrode.  A complex multilayer mirror and multiple cermet light blocking layers completely optically isolate the liquid crystal from the substrate.  The liquid crystal is AC driven, across these light blocking layers, by capacitive coupling.  Thus, no direct electrical connection path to the liquid crystal is necessary and the integrity of the light blocking layer is not breached.

In the case of electrochromic displays, however, this approach cannot be used as such displays are DC driven and require direct electrical connection paths between the switching transistor matrix and the corresponding matrix of display electrodes constituting the picture elements.  In all electrochromic displays, the colouring effect which produces the image takes place directly on the surface of the electrodes which must be in contact with the electrolyte.  Consequently, ambient or projection light may penetrate the gaps between electrodes and photo-activate the underlying semiconductor substrate.

In an article entitled "Light Barrier for Integrated Projection Display" by F A Huntley, (IBM Technical Disclosure Bulletin, Vol 23, No 1, June 1980, p347), a multilayer dielectric mirror comprising a large number of alternate silicon oxide and silicon nitride layers is proposed as a light barrier for such an electrochromic display.  This mirror entirely covers the underlying silicon substrate except for via holes through which the underlying transistors are electrically connected to display electrodes.  The deposition of so many layers is relatively complex and results in a film of several micrometres in thickness.

A second article at page 346 of the same Journal entitled "Light Absorbing Insulator Layer" by G Brewer, P Burr and F A Huntley entitled "Light Absorbing Layer" describes a light absorbing bismuth oxide layer which is electrically insulating and is said to be suitable as a light barrier material for a liquid crystal or electrochromic projection display in which display electrodes are formed·on a silicon substrate.

Again a relatively thick film is required to reduce light transmission to 5%. It has been found that neither the optical nor the electrical properties of this material are easy to control.

Thus, the above processes, while attractive in principle have proved relatively complex to control in practice and have the disadvantage of requiring a barrier thickness considerably greater than that of the other layers of the display thus requiring additional time to plate up the via metallurgy.

Although such insulating light barriers are preferable in terms of electrical integrity, insulators, in general, tend to be transparent. Thus, from an optical point of view, a metallic light barrier would have advantages in that very thin layers of metal are capable of blocking light. Use can also be made of light barrier metallization, prior to final definition of the barrier, to test the partly made display for faulty transistors or via metallurgy.

The employment of a metallic light barrier is described in European patent application no. 42893-A1. In this system, a triple layer of chromium/gold/chromium, which is deposited as part of the via metallurgy, is also used to form a light blocking layer under the inter-electrode gaps. In order to prevent shorting between the light barrier and the vias, a strip or ring of light barrier circumscribing each via is removed.

In subsequent experiments it has been found that this type of light barrier is not completely effective. Although under ambient light conditions no detectable leakage current could be measured, under projection lamp illumination, a leakage current of 40 μA was measured. This corresponded to a 20% loss of charge from written display electrodes over a period of about half a minute, presumably as a result of light entering the inter-electrode gaps and reaching the substrate by way of the breach in the barrier around the vias after multiple
reflections between the light barrier and electrodes.

Disclosure of the Invention

Thus the prior art has failed to provide a completely effective
light barrier for the type of display in which direct electrical
connection is needed between switching transistors and display
electrodes.  Prior insulating barriers have been complex or unreliable
to process and bulky and a prior metallic barrier has not been
completely effective.

The present invention derives from the realisation that the use, as
in European patent application 42893-A1, of the same metallization as in
the via to provide a light barrier, while superficially attractive, has
certain drawbacks.  These arise because of the difficulty in defining
and etching a strip circumscribing the via without leaving short circuit
connections and without affecting the metal in the via.  For these
reasons, the width of the strip must be relatively high, of the order of
several microns, and its position must be well away from the via edge.
Moving the strip further from the via necessarily brings it closer to
the outer edge of the overlapping display electrode.  Light can then
reach the breach in the barrier, provided by the strip, after fewer
multiple reflections than otherwise and, consequently, without the same
degree of attenuation.

Accordingly, the present invention provides a semiconductor
integrated display having a semiconductor substrate with an array of
individually switchable transistors integrated therein; an array of
opaque display electrodes overlying the array of transistors and being
spaced apart from each other; electrically insulating material
separating the display electrodes from the semiconductor substrate;
metallic vias for providing electrical connection through the insulating
material between each display electrode and a respective transistor; and

0112417

a metallic light barrier, intermediate the display electrodes and the substrate, which is at least coextensive with the gaps between display electrodes to prevent direct passage of light by way of the inter-electrode gaps to the substrate, the light barrier being sandwiched between upper and lower layers of insulating material; the display being characterised in that the light barrier is a metallic layer comprising at least one different metal from the adjacent via metallurgy and in that the barrier extends over substantially the whole of the transistor array area except for rings of insulating material around the edges of each via to insulate them from the barrier.

The invention also provides a method of making a semiconductor integrated display comprising at least the steps of forming an array of individually addressable transistors in a semiconductor wafer; forming a lower insulating film over said transistors, in which are provided via holes above respective transistors for enabling electrical contract to be made; depositing electrically conductive metal in the via holes to make electrical contact with the transistors; depositing an opaque metal light barrier, comprising at least one metal different from that last deposited in the via, over the whole array; selectively removing the light barrier from over and around the edges of the vias; forming an upper insulating film over the entire light barrier which also insulates the edges of the light barrier from the via metal; and forming opaque display electrodes over each via which are in electrical contact with the via metal and which overlap the light barrier, such that the display electrodes and the light barrier substantially prevent photo-activation of the semiconductor by light incident on the display.

By employing a different metal in the light barrier from that used in the vias, it is possible to selectively remove the barrier metal from over the vias and from a narrow strip around the via edges in a single step without damaging the underlying via metallisation. Because this strip is adjacent the via edge, light, penetrating the array of electrodes, has to undergo the maximum number of multiple reflections before it reaches the strip, thus improving the efficiency of the light barrier.

Aluminium is the preferred light barrier material for deposition directly over the vias.  Preferably, an upper layer of chromium is deposited over the aluminium to give a darker less reflective surface. If the chromium is partially etched away until only a thin porous layer remains and the aluminium is subsequently partially etched through the porous chromium, but only to an extent insufficient to undercut the chromium, a matt black surface is produced which is an excellent light absorber.

The preferred combination of via metals for use in conjunction with the aluminium based light barrier is a lower layer of chromium and an upper layer of gold.  The gold provides a good contact for subsequently deposited silver display electrodes which are formed by electroplating onto an initially evaporated layer.

A further improvement in the efficacy of the light barrier is afforded by forming the upper insulation above the light barrier as two discrete layers of organic passivation material each of which is separately applied and cured.  Because the risk of coincident pinholes in multiple layers is small, the total thickness of the upper insulator can be kept to a minimum.  This improves light barrier efficiency because the number of multiple reflections needed for external light to reach the via increases with decreasing spacing between the light barrier and display electrodes.  The preferred upper insulator material is polyimide.

It is also a preferred feature that the insulation beneath the light barrier comprises a lower inorganic layer and an intermediate organic layer, preferably polyimide.  The inorganic insulation layer can conveniently be silicon oxide where the substrate semiconductor material is silicon.  Conventional aluminium contact pads for the transistors are provided at the base of the vias.

Besides its use as a light barrier, the matt black partially etched chromium on aluminium surface may have wider application as an anti-reflective or energy absorbing surface.  The general principle of producing such a surface is to deposit a metal film on a substrate (not necessarily chromium on aluminium), to partly remove the deposited metal film by etching until it is rendered porous or discontinuous and then to selectively partially etch the substrate through the mask formed by the discontinuous metal without undercutting the metal.

## Brief Description of the Drawings

Figure 1 is a sectional view (not to scale) through an integrated display electrode/semiconductor structure forming part of a display according to the present invention.

Figures 2 to 14 show similar schematic sectional views of various stages in the manufacture of the structure of Figure 1.

## Detailed Description

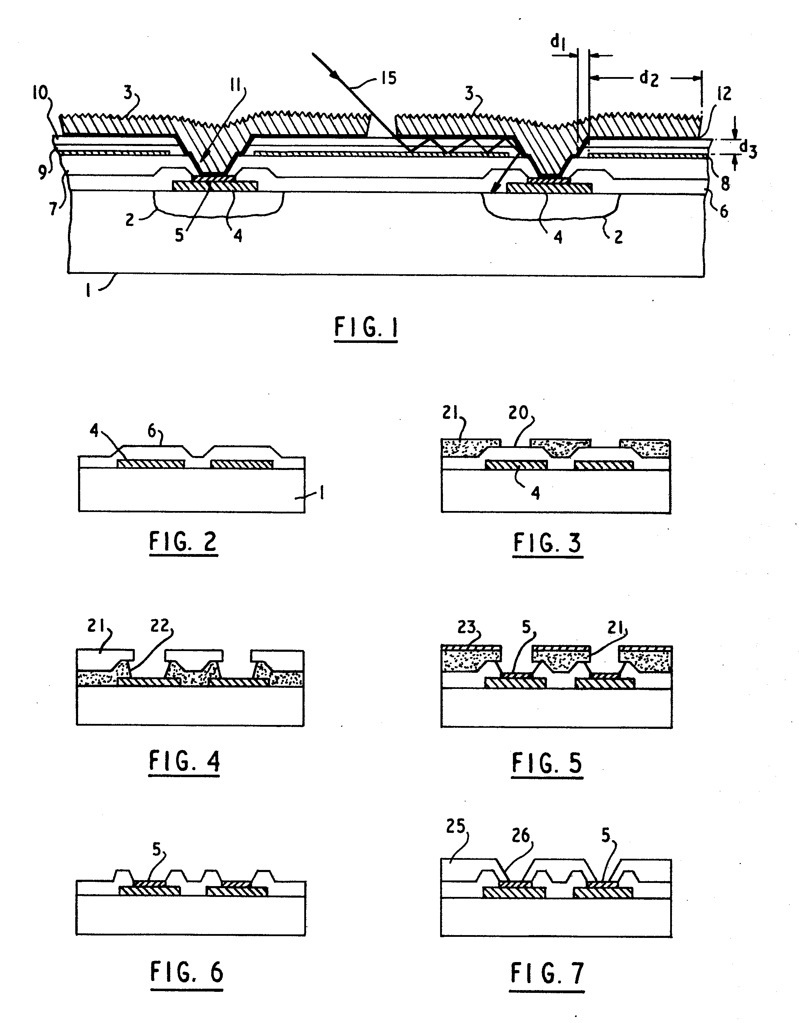

Figure 1 shows a silicon substrate upon which is formed, by integrated circuit techniques, the display electrode structure of an electrochromic display according to the invention.  The substrate 1 has formed therein by conventional N-channel field effect transistor techniques an array of FET's.  Two $N^+$ diffusions 2 constituting the drains of two of these FET's are shown.  Each drain is connected to an overlying silver display electrode 3 by means of aluminium drain contact pads 4 and intermediate through via metallurgy 5 comprising a lower layer of chromium and an upper layer of gold (not shown separately).

The FET's are connected, conventionally, by a further pattern of aluminium conductors (not shown) to row and column drivers formed at the periphery of the array. The drivers operate to write and to erase display electrodes selected by the contents of row and column shift registers, also formed in the silicon substrate at the periphery of the array. The electrical arrangement and operation of such matrix addressing and drive circuitry for an electrochromic display is described in the previously referenced European published patent application no. 42893-A1 and will not be further described here.

The type of electrochromic display with which the integrated display electrode structure of Figure 1 is designed to work employs one of the well known class of electrochromic materials known as the viologens. The preferred viologen is a mixture of 1,1'di-heptyl-4,4'bipyridinium phosphate and hypophosphite, as described in European patent no. 1912-B. The viologen is present in aqueous solution in contact with the display electrodes 3 of Figure 1. Application of an appropriate constant current to the electrodes 3 via the FET's causes reduction of the transparent viologen di-cation at the electrode surface to the coloured radical cation, which precipitates onto the electrodes to form the image to be displayed.

One display cell structure for packaging the integrated display electrode substrate in a cell beneath an aqueous viologen solution is described in European published patent application no. 42893-A1. This describes the counter and reference electrodes employed and the making of external electrical contact to both these electrodes and to the substrate. However, the preferred mechanical and optical package for the substrate of Figure 1 is described in European published application no. 55317-A1. As described in more detail in that publication, the substrate forms the base of a cell whose walls and top are made of a transparent acrylic material. The display is illuminated by a projection lamp by way of a light guide formed in one of the side walls. Scattered light from the matt surfaces of the display electrodes is collected for projection onto a screen by a lens positioned adjacent a window in the cell located opposite to the display electrodes. Further details of these packaging aspects will be found in the referenced applications.

Returning now to Figure 1, the remaining portion of the integrated display electrode structure will be described. Because of the need for complete electrical isolation of the display electrodes 3 and their associated connection metallurgy from each other several layers of insulation are provided. The first of these is a conventional silicon dioxide (quartz) passivation layer 6 by which the contact pads 4 and the other aluminium conduction lines are originally covered. Because such quartz insulators are susceptible to pinholing, a further organic passivation layer 7 of polyimide is also provided.

Above the polyimide layer 7 is a metallic light barrier 8 consisting of a lower thicker layer of aluminium and an upper thinner layer of chromium (not separately shown). Over the light barrier 8 are two further layers 9 and 10 of polyimide to insulate the light barrier from the overlying display electrode 3 from the electrochromic solution and from the wall of the via 11.

The upper portions of vias 11, above the chromium/gold layer 5, and the display electrodes 3 are made of silver electroplated over a thin layer of evaporated silver, visible as the heavy line 12. The surface of the display electrodes is rough to give it a matt white appearance.

The effect of the light barrier 8 may be seen by considering the path which a ray of light 15, incident upon an inter electrode gap 16, must follow in order to reach the silicon substrate 1. Multiple reflections between the upper surface of the barrier and the lower surface of the display electrode are necessary for any light to reach and penetrate the small gap between the edge of the barrier and the via wall.

0112417

The effectiveness of the barrier depends on how small this gap, $d_1$, is and how close it can be to the via wall. The length, $d_2$, of overlap between the electrode and light barrier is also important. By employing a light barrier metal, aluminium, which is different from that in the adjacent and the immediately previously deposited portions of the via, it is possible to minimise $d_1$ and maximise $d_2$ because selective etching of the light barrier can be employed.

Another significant dimension is the distance, $d_3$, between the barrier and overlying electrode which is determined by the thickness of insulating layers 9 and 10. Minimising $d_3$ maximises the number of multiple reflections which must take place beneath the display electrodes for light to penetrate the barrier. Since each reflection attenuates the beam to some extent the greatest possible number of reflections is desirable.

The double chromium on aluminium layer forming the light barrier 8 can be modified to render the upper surface of the barrier a matt black in colour. This is achieved, as will be described in detail later by etching away most of the chromium until only a thin discontinuous layer remains and then selectively etching the aluminium through the chromium. This blackened surface greatly decreases the amount of light reflected by the barrier.

Of course, another improvement which would be possible would be to render the polyimide insulating layers 7, 9 and 10 light absorbing, e.g. by loading them with a dark pigment. However, this would complicate the processing and could reduce their electrical resistivity. For these reasons, this approach is not used.

The display partly illustrated in Figure 1 has 72,000 display electrodes (pels) at a density of about 20 pels $mm^{-1}$. The inter pel gaps are of the order of 5 microns in width. In a display having the light barrier described above, i.e. employing unmodified chromium on aluminium, measurements of leakage current were made by applying erase
potential to all pels and measuring the current in the erase drive line.
In ambient light, there was no measurable current.  Under illumination
by a 20 W tungsten halogen projection light a current of only 3μA was
detected.  This leakage current if shared equally between all the pels
would correspond to a 20% loss of charge of written pels over a period
of about 8 minutes.

The method of making the integrated display electrode structure of
Figure 1 will now be described with reference to Figures 2 to 14.  The
same reference numerals will be used as in Figure 1.

The first stage in the process is the manufacture of the integrated
circuit portion by conventional N-channel FET techniques which need not
be described in detail.  The addressable matrix of FET's, the selection
and driver circuits and the drain contact pads are covered by a
conventional passivation layer 6 of quartz (1.5 microns).  Figure 2
shows the silicon wafer 1 at this stage including two of the drain
contact pads 4.  Drain diffusions 2 have not been shown.

The further steps in manufacture are as follows:-

1.    Quartz etch

The quartz coated wafer is precleaned using a mixture of nitric and
chromic acids after which an adhesion coating is applied by immersing
the wafer in a vapour mixture of Freon and hexamethyl di-silazane.  The
wafer is then spin coated with a commercially available sensitized
lacquer photoresist (Shipley AZ or equivalent) and dried.  After
alignment of the wafer with a mask, the photoresist is exposed and
developed in Shipley AZ developer or equivalent to leave windows 20 in
the photoresist 21 as shown in Figure 3.  These define the position of
the via holes over the drain pads 4.

0112417

After oven baking at 110°C to harden the resist, the quartz is etched in a water/glycerine solution of hydrofluoric acid and ammonium fluoride. The resulting quartz windows 22, Figure 4, are of approximately 7 microns width. The etch resist is left in place. Finally the wafer is rinsed and dried in a nitrogen atmosphere.

2.    Evaporation of via metal

A first layer of chromium is evaporated from an electron gun over the entire wafer, which is at room temperature, to a thickness of 250Å. Gold is then phased in to the evaporation until a further 350Å have been deposited after which pure gold is evaporated to 1000Å thickness. The initial chromium layer is to prevent diffusion of the gold into the aluminium. The gold is ultimately to provide good electrical contact with the silver elctrodes.

To provide temporary protection of the gold during subsequent processing, a top layer of 600Å of chromium is also deposited. These layers of metal, which are not separately illustrated, form the via metal 5 as shown in Figure 5. The same metal is also present at 23 on top of the resist layer 21.

After evaporation of the via metal 5, the surplus metal 23 and resist 21 are removed in a lift-off step by soaking in acetone followed by iso-propanol. The wafer now appears as shown in Figure 6.

3.    First polyimide insulation

After the wafer of Figure 6 has been rinsed in de-ionised water and spun dry in hot nitrogen, a silane adhesion layer is applied. Then a polyimide coat 25 (Figure 7) of 6000-8000Å is spin coated onto the wafer and dried.

Again using AZ type resist as above, a new set of windows is defined above the metal 5 by photolithography. The resist is developed in a potassium hydroxide solution which also acts as a polyimide etch to re-open the via holes at 26. The potassium hydroxide is spun on to the wafer which is afterwards rinsed and neutralised with acetic acid. These holes are 1-2 micron smaller than the quartz holes into which the via metal 5 was evaporated so that a coat of polyimide protects the drain pads against "mousehole" formation during subsequent etching of the aluminium light barrier. The remaining undeveloped resist is stripped in n-butyl acetate followed by iso-propanol, to leave the wafer structure of Figure 7, which is again rinsed in de-ionised water and spun dry in a hot nitrogen atmosphere.

4.    Light barrier evaporation

In order for the polyimide to resist subsequent etching and to eliminate water molecules formed during the condensation reaction, the wafer of Figure 7 is baked at 250°C for half an hour. This baking causes some polymerisation of polyimide vapours into the via from which the gold is protected by the top layer of chromium in via metal 5. After polyimide baking, the protective layer of chromium is partly etched away in an alkaline potassium ferricyanide bath at 40°C. This etchant also cleans the polyimide and renders it hydrophilic to promote adhesion of subsequently evaporated aluminium. Cleaning of the via is completed with a DI water rinse and spin drying in hot nitrogen.

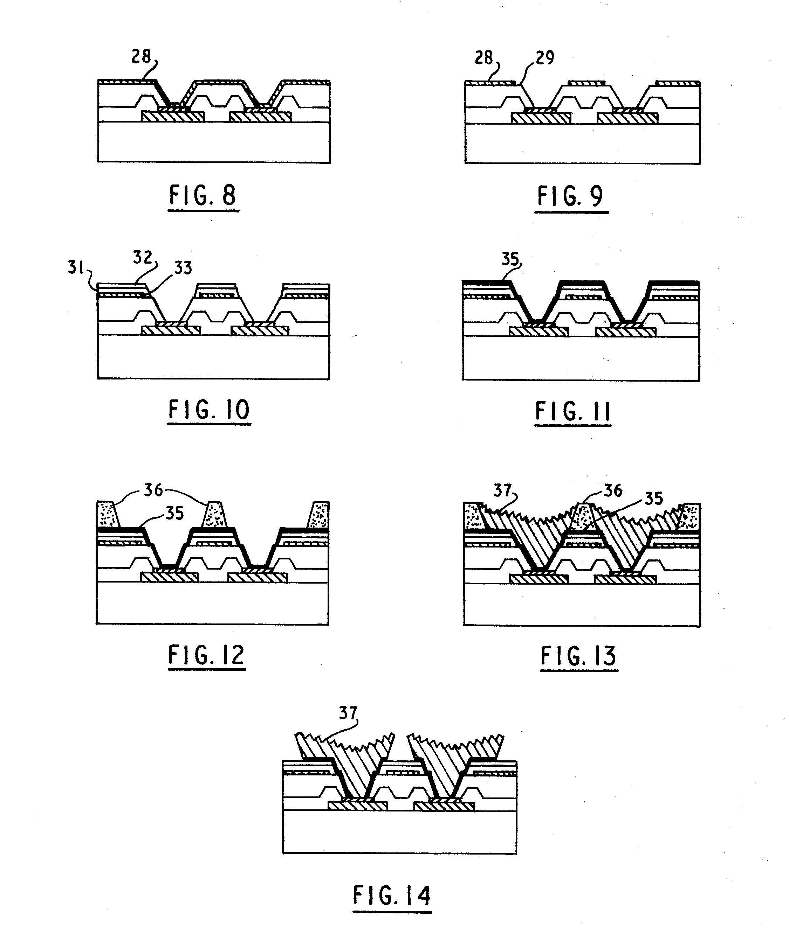

$2500\overset{o}{A}$ of aluminium followed by $600\overset{o}{A}$ of chromium are then evaporated over the entire wafer to provide the light barrier metallization 28, as shown in Figure 8.

At this stage, the light barrier metallization is connected to the metal 5 in all the vias and through it to the underlying FET's. If desired, an electrical test for faulty FET's or vias can be performed by making use of their temporary common connection. If a given FET is

0112417

selected and turned on, a signal should be detectable on the light barrier metal, provided that the FET and its associated via metallization are good.

5.    Light barrier darkening (optional)

This process is used to convert the surface of the light barrier metal 28 into a matt black adherent surface.  The top chromium layer of the light barrier is etched in alkaline ferricyanide at a temperature of 40°C until only a fine mesh of 50-100Å thickness remains on the surface.

The lower aluminium is then selectively etched at room temperature for about 2 minutes in a mixture of phosphoric and nitric acids which does not affect the chromium.  The aluminium etch is stopped before the chromium is totally undercut.  The end point is judged by inspection. The resulting surface is matt black in colour and non-friable and is a substantially better absorber of light than the untreated light barrier.

6.    Light barrier etch

The light barrier must now be removed in a strip around each via to prevent shorting during operation of the display.  Because the lower layer of the light barrier (aluminium) is a differnet metal from the underlying via metal (chromium), an etch mask can be employed which exposes the area of the via as well as a small surrounding strip.

Such a mask is produced photolithographically using AZ type resist and AZ developer as previously described.  The wafer is oven baked at 110°C for 10 minutes to harden the resist and the chromium is then etched away in the same alkaline potassium ferricyanide as previously employed, at a temperature of 40°C.  After rinsing, the aluminium of the light barrier is etched at 40°C in a mixture of phosphoric and nitric acids.  The resist is stripped, as before, by immersion in n-butyl acetate and, subsequently, iso-propanol, after which the wafer is rinsed in DI water and spun dry in hot nitrogen.  The structure is now as shown
in Figure 9, the light barrier having been etched back from the via
edges to form holes 29 of 11-13 microns width.

7.    Upper polyimide insulation

Two further coats 31,32 of polyimide of 3500Å thickness are now
applied to insulate the top of the light barrier.  The integrity of two
separately applied and cured coats is better than that of a single coat,
because of pinholing.

The process for applying these coats is essentially the same as
that for the first polyimide insulation, as described in Stage 3, above.
Polyimide is spin-coated onto the wafer and dried.  Subsequently, an
etch mask is defined by exposing HC resist.  Both developing of the
resist and the etching of the polyimide is effected with potassium
hydroxide solution.  Finally, the undeveloped resist is stripped with
n-butyl acetate followed by iso-propanol.  Rinsing and drying is carried
out as described in stage 3.

The structure produced is as shown in Figure 10.  The holes in the
top of the upper insulation are between 6 and 8 microns across so that
the edge of the light barrier 28 is insulated by a ring 33 approximately
2.5 microns wide of polyimide from the edges of the via hole.

8.    Silver evaporation

The upper polyimide insulation is baked at 250°C, after which, the
remaining chromium on top of via metal 5 is etched in alkaline potassium
ferricyanide.  This etch exposes bare gold at the top of the via.

Silver is then evaporated over the entire wafer at room temperature
until a 1500Å layer 35 (Figure 11) has been deposited.

0112417

The wafer is then baked once more, this time at 350°C for 30 minutes in a nitrogen atmosphere to effect a final cure of the polyimide. The same high temperature bake also causes interdiffusion of silver and gold at their interface in the via, giving improved electrical conductivity.

9.    Silver plating

The evaporated silver layer 35, which is continuous over the whole surface, is used as the cathode for subsequent electroplating of further silver to the full thickness of the display electrodes. Before plating, a thick (3.5 micron) mask of HC resist 30 is exposed to define the periphery of the display electrodes as shown in Figure 12. The inter electrode gaps, as defined by the tapering resist walls are approximately 4 microns at the top and 5 at the base.

Prior to plating, the structure of Figure 12, including resist 36, is treated with a wetting agent (FC98 available from 3M Corp) and rinsed in de-ionized water. The wafer is then lightly etched in ferric nitrate and again rinsed.

Electroplating is carried out in two stages, the first of which is the deposition of about 1000$\overset{\circ}{\text{A}}$ of bright silver from a commercially available bright silver bath ("Argatec" - Schering A.G.). The plating cycle is 7 mS on 3 mS off at a current density of 10 mAcm$^{-2}$. After pre-dipping the partly plated wafer in potassium thiocyanate solution the wafer is transferred to a matt silver plating bath. This bath contains 240 gm/l of potassium thiocyanate, 10 gm/l of potassium dihydrogen orthophosphate and 32 gm/l of silver thiocyanate and is maintained at 28°C. Pulsed plating (0.7 mS-on, 0.3 mS-off) at a current density of 10 mAcm$^{-2}$ is employed for 27 minutes to produce matt surface silver electrodes 37 of approximately 4 microns thickness as shown in Figure 13. After plating is complete, the wafer is post-dipped in potassium thiocyanate solution, rinsed and spun dry in hot nitrogen.

Finally the resist 36 is removed with acetone followed by
iso-propanol.

10.  Sputter etch

As will be noted from Figure 13, the evaporated silver layer 35,
present in the inter-electrode gaps must, finally, be removed so that
the electrodes are electrically isolated from each other.  This is
achieved by sputter etching the entire silver surface, including
electrodes 37, with argon ions (Voltage 1.5 kV, current 200 mA) for a
time long enough to remove completely the 2500Å evaporated silver layer
35 from between the electrodes 37.  The sputter etch also and cleans the
matt surface of the electrodes 37 by removing a similar thickness.  Such
cleaning has been found to be desirable before the packaging of the
finished display electrode structure of Figure 14 into a display cell in
contact with a viologen solution.

<u>CLAIMS</u>

1.    A semiconductor integrated display having a semiconductor substrate
(1) with an array of individually switchable transistors (2) integrated
therein; an array of opaque display electrodes (3) overlying the array
of transistors and being spaced apart from each other; electrically
insulating material (6,7) separating the display electrodes from the
semiconductor substrate (1); metallic vias (11) for providing electrical
connection through the insulating material between each display
electrode (3) and a respective transistor (2); and a metallic light
barrier (8), intermediate the display electrodes (3) and the substrate
(1), which is at least coextensive with the gaps between display
electrodes (3) to prevent direct passage of light by way of the
inter-electrode gaps to the substrate (1), the light barrier (8) being
sandwiched between upper and lower layers (7,9) of insulating material;
the display being characterised in that the light barrier is a metallic
layer (8) comprising at least one different metal from the adjacent via
metallurgy and in that the barrier extends over substantially the whole
of the transistor array area except for rings of insulating material
around each via (11) to insulate them from the barrier.

2.    A display as claimed in claim 1 in which the different metal in the
light barrier is aluminium.

3.    A display as claimed in claim 2 in which the light barrier consists
of a lower layer of aluminium and an upper layer of chromium.

4.    A display as claimed in claim 3 in which the chromium layer is
relatively thin and is discontinuous, and the aluminium layer has been
partially selectively etched throught the discontinuous chromium layer
so as to render the upper surface of the light barrier a matt black.

5.   A display as claimed in any preceding claim in which the insulating material above the light barrier consists of two relatively thin layers of an organic passivating material, so as to minimise the separation between the barrier and the display electrodes while maintaining the integrity of the insulation.

6.   A display as claimed in claim 5 in which the insulating material forming the two layers is polyimide.

7.   A display as claimed in claim 6 in which the insulating material lower layer is also polyimide.

8.   A display as claimed in any preceding claim in which the vias comprise chromium and gold, the display electrodes being silver.

9.   A display as claimed in claim 8 in which the substrate semiconductor material is silicon, and includes a silicon oxide passivation layer and aluminium contact pads for the transistors at the bases of the vias.

10.   A method of making a semiconductor integrated display comprising at least the steps of forming an array of individually addressable transistors in a semiconductor wafer; forming a lower insulating film over said transistors, in which are provided via holes above respective transistors for enabling electrical contract to be made; depositing electrically conductive metal in the via holes to make electrical contact with the transistors; depositing an opaque metal light barrier, comprising at least one metal different from that last deposited in the via, over the whole array; selectively removing the light barrier from over and around the edges of the vias; forming an upper insulating film over the entire light barrier which also insulates the edges of the light barrier from the via metal; and forming opaque display electrodes over each via which are in electrical contact with the via metal and which overlap the light barrier, such that the display electrodes and the light barrier substantially prevent photo-activation of the semiconductor by light incident on the display.

11. A method as claimed in claim 10 in which the light barrier metal, different from that last deposited in the via, is aluminium.

12. A method as claimed in claim 10 in which the deposition of the light barrier comprises, firstly, depositing a layer of aluminium over the array and, subsequently, depositing a second thinner layer of chromium over the aluminium.

13. A method as claimed in claim 12 comprising the further steps of etching away the chromium to leave a discontinuous porous layer on the surface of the aluminium and selectively partially etching the aluminium through the mask formed by the incomplete chromium layer to an extent insufficient to remove the chromium by undercutting.

14. A method as claimed in any one of claims 10 to 13 in which the upper insulating film is formed as two discrete layers of organic passivation material, each of which is separately applied and cured.

15. A method as claimed in any one of claims 10 to 14 in which the lower insulating film is inorganic, the method including the further step of depositing an intermediate insulating film of organic material over the array prior to deposition of the light barrier metal.

16. A method as claimed in any one of claims 10 to 15 in which the formation of the array of transistors is followed by the provision of aluminium contact pads to the transistors, and the electrically conductive material deposited in the via holes comprises a chromium layer followed by a gold layer.

17. A method as claimed in claim 16 in which the display electrodes are silver and are formed by firstly evaporating silver to make contact with

0112417

the gold in the via holes and subsequently by electroplating of further silver.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-4 239 346 (RANDAHL B. LLOYD) * Column 1, line 51 - column 2, line 36; column 3, lines 22-48; column 6, lines 7-44; column 7, line 61 - column 8, line 27; figure 9b * | 1,2 | G 02 F    1/133<br>G 02 F    1/17 |
| A,D | EP-A-0 042 893 (INTERNATIONAL BUSINESS MACHINES CORP.) * Page 21, line 16 - page 22, line 23; figure 7 * | 1 | |
| A | GB-A-2 016 726 (HUGHES AIRCRAFT COMPANY) * Page 1, line 48 - page 2, line 8; figures 1,2 * | 1,8,9 | |
| A,D | GB-A-2 011 639 (HUGHES AIRCRAFT COMPANY) * Abstract; page 2, lines 115-128; figure 1 * | 1,10 | TECHNICAL FIELDS SEARCHED (Int. Cl. ³)<br><br>G 02 F    1/17<br>G 02 F    1/133<br>G 09 G    3/34<br>H 01 L    29/78 |
| A,D | IBM TECHNICAL DISCLOSURE BULLETIN, vol. 23, no. 1, June 1980, pages 347-348, New York, USA F.A. HUNTLEY: "Light barrier for integrated projection display" * Whole article * | 1,5-10 | |

The present search report has been drawn up for all claims

| Place of search | Date of completion of the search | Examiner |
|---|---|---|
| THE HAGUE | 10-08-1983 | HORAK G.T. |